Europäisches Patentamt

**19** European Patent Office

Office européen des brevets

**11** Publication number: **0 041 537**

**B1**

**12** EUROPEAN PATENT SPECIFICATION

**45** Date of publication of patent specification: **24.04.85**

**51** Int. Cl.⁴: **E 02 B 15/04**

**21** Application number: **81900051.4**

**22** Date of filing: **08.12.80**

**86** International application number:
**PCT/HU80/00007**

**87** International publication number:
**WO 81/01720 25.06.81 Gazette 81/15**

**54** METHOD AND DEVICE FOR REMOVING FLOATING LIQUID IMPURITIES, PARTICULARLY OIL, FROM A FLOWING WATER SURFACE.

| | |
|---|---|
| **30** Priority: **12.12.79 HU ai000291** | **73** Proprietor: **NOVEX FOREIGN TRADE CO. LTD. FOR DEVELOPMENT AND COMMERCIALIZATION OF INVENTIONS** P.O. Box 62 Március 15 tér 1 H-1346 Budapest (HU) |
| **43** Date of publication of application: **16.12.81 Bulletin 81/50** | |
| **45** Publication of the grant of the patent: **24.04.85 Bulletin 85/17** | **72** Inventor: **SZEREDAY, Pál** **Agárdi utca 16** **H-1126 Budapest (HU)** |
| **84** Designated Contracting States: **AT CH DE FR GB LI NL SE** | **74** Representative: **Gold, Tibor Zoltán et al** **T.Z.GOLD & COMPANY 9, Staple Inn** **London WC1V 7QH (GB)** |
| **56** References cited: **GB-A-1 428 818** **US-A-3 951 810** **US-A-4 111 811** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 041 537 B1

## Description

Technical Field

The invention relates to a method for removing floating liquid impurities, particularly oil, from a flowing (or forced flowing) water surface by creating locally a region having a lowered water surface level, by letting a surface layer of water contaminated (by oil) flow into the region over a spillway or weir, by separating the mixture of liquid impurities and water, and by removing the separated, collected impurities. Furthermore, the invention relates to an apparatus for removing liquid impurities, particularly oil, floating on the surface of flowing or forced-flowing water, the apparatus being partly submergible in water and comprising a vessel provided with wall elements and an overflow spillway (weir) that together surround a region of lower water level.

Background art

Due to ever increasing industrialization, impurities dangerous to the purity of, and living organisms in, natural water sources occur more and more frequently and great efforts are made all over the world to prevent and eliminate them. Among the impurities, petroleum products are reckoned as the most dangerous. Different methods and equipment have been developed in order to remove them. These can in practice, be divided into two groups on the basis of their operational principles.

Equipment of the first group contains (oil) scrapers operating on the basis of the so-called 'adhesion principle' viz. that while oil adheres to certain structures submerged in impure water — which are afterwards taken out and either cleaned and re-used or discarded — water does not adhere to them. Thus the oil can be recovered by scraping or wiping the equipment which generally has a large surface area (rotary discs, elevators, bundles of fibres, tussels) made of suitable structural materials (steel, plastics, etc.).

In the other group, the equipment uses oil and impurity skimming methods of separating the impure surface layer of water. Their common feature is that a space inside a spillway or weir or inside the rim of a tank floating in the water is sucked by a suitable pump, thereby creating a level difference between the surface of the water inside the tank and outside it. The surface layer of water and the floating impurities, such as oil, run slowly, i.e. flow over the spillway-weir or rim and the pump sucks the mixture of oil and water flowing in and continuously maintains the level difference. The mixture sucked is separated, e.g. gravitationally. Equipment is also known that has a unit that serves at the same time as a separator. A common disadvantage of all known equipment is that it can be used with full efficiency only in still water and a fundamental condition of their efficient operation is that there can only be a slight speed difference between the equipment and the impure water. Therefore, such equipment is operated in such a way that the impurities in the vicinity of the equipment are locally stopped by damming, air blasting etc. Separation, however, is in such cases of very low efficiency and considerable losses occur; depending on the water flow rate caused by the turbulence produced, part of the impurities floating on the surface (such as oil) avoids the spillway (weir) by bypassing the equipment and the damming elements mostly by flowing underneath the equipment.

U.S. Patent Specification 4,111,811 describes an apparatus operating on the second principle. It describes a vessel having a weir behind which there is located an enclosed space from which a mixture of oil and water is sucked. In the lower depths of the enclosed space, there is an outlet port for water entering the enclosed space. The operation of this apparatus requires a pump to remove the water and oil and this means that the apparatus can only operate in the vicinity of a convenient source of electricity. Also, because both oil and water are drawn off by the pump, there is a requirement for a large surface holding or treating tank.

Other apparatus operating on the second principle are described in U.S. Patent Specification 3,966,615; 3,662,892; and 3,715,034.

Disclosure of Invention

The object of the invention is to skim off an impure surface layer of water to separate the mixture of impurities and water, and to develop a method and device suitable for the removal, at a high efficiency, of the liquid impurities, particularly e.g. petroleum products, floating on the surface in flowing or forced flowing water.

According to the present invention the skimming of the impure surface water layer, separation and collection of the separate impurities, can be realized in an apparatus device by producing an expedient flow within the apparatus both as regards the direction and rate of flow.

According to the present invention there is provided a method of removing floating liquid contamination from naturally- or forcedly-flowing water surfaces, which process comprises skimming off a surface layer of the water that also contains contamination by means of a weir, maintaining on the downstream side of the weir a region of water whose surface level is below that of the flowing water on the upstream side of the weir, separating and collecting the contaminants and discharging the water through an orifice, characterised in that the water in the region downstream of the weir is maintained at a lower level by a suction effect applied to the region by the flow of the naturally or forcedly flowing water past an orifice located below the level of the naturally or forcedly flowing water and further characterised in that the separation of the contaminants is achieved by decreasing the velocity of water in the low water level region and by causing the water to reverse its flow direction between the weir and the outlet orifice, whereby a localised substantially flow-free area is established in which the contaminants collect and from which they can be removed.

In a preferably and advantageous performance of the method according to the invention, the impurities, particularly oil, obtained from the mixture, are separated in the flow-free area in the region of lowered water level, then from there it is discharged either continuously or intermittently in a known way e.g. by pumping, gravitationally, or by mechanical, or adhesion means, etc.

The present invention also provides an apparatus for removing floating liquid contamination from naturally- or forcedly-flowing water, which apparatus is partially submergible in the water and comprises a vessel for maintaining within it a region of water whose level is below that of the naturally- or forcedly-flowing water, a weir located at the leading end of the vessel for admitting a surface layer of naturally- or forcedly flowing water and contaminants into the region, an outlet orifice for discharging water from the vessel and means for collecting or removing the contaminants, characterised in that the vessel firstly increases in depth rearwardly from its leading edge and then decreases in depth towards the trailing edge, the outlet orifice being located at or near the part of the vessel having greatest depth and including means for varying the cross-section of the orifice, the apparatus further comprising a baffle throat partially surrounding the orifice on the outside of the vessel and further characterised in that in front of the weir there is provided an eddy-dissipating grid.

It is preferred that the device according to the present invention is provided with a weir of adjustable height and/or a baffle plate of adjustable angle.

For the sake of undisturbed removal of the impurity, when carried out continuously or intermittently, it is advantageous to form an impurity collecting zone in the vessel separated by a barrier extending from the bottom to a position under the water level in the vessel and located in the rear part opposite to the weir. For the sake of the best possible turbulent-free inflow of the surface water layer and of ensuring the minimum level of losses, the apparatus according to the invention is provided also with an eddy diffusion grid arranged in the surface water layer in front of the weir.

The method and apparatus according to the invention make possible, by using the energy of flow, in one step and in a single piece of equipment, the collection of liquid impurities e.g. petroleum products floating on the water surface, the separation of the impure surface water layer, the separation of the mixture of impurities and water and the discharging of separated and collected impurities. The impure surface water layer is separated without speed reduction (without damming) and together with the eddy diffusion grid on the inlet side of it, it has proved possible to eliminate eddies that break up the layer of impurities, thereby causing a loss in discharging efficiency. The lowering of the water level and continuous flowing through of the mixture of impurities and water along the separating path are effected solely by the suction effects produced by an increase of the flow rate, based on the Bernoulli formula, without the utilization of an external power source (e.g. pumping). The flow path through the apparatus of the present invention is preferably of increasing cross-section, which ensures undisturbed flow therethrough. The cross-section may be adjustable by selecting the proper angular position of a baffle plate in the vessel which performs gradual deceleration of the mixture of impurities and water in the first section of the vessel after entry into the vessel. After the baffle plate, the lower part of the flow which consists almost wholly of water is generally forced to change direction while the upper layer -containing the impurities, particularly oil-phase, stops and thus the lower water layer leaves the inner space of the vessel accelerating towards the opening in the bottom of the device by the action of suction.

The method and apparatus described above in detail can be widely applied, according to the invention, as portable oil scrapers, impurity separators in rivers — as fixed structures (e.g. in hydro-electric power stations) — fixed preventive oil traps at the outlet pipelines of potential impurity sources (e.g. oil refineries, heating plants, etc.) as well as impurity, particularly oil-contamination, traps, collecting devices at earthworks; that is to say the invention can be used for prevention of pollution as well as to counter already existing pollution. Furthermore, the characteristics of the method according to the invention can be utilizing when designing moving oil scraper ships i.e. a portable preventive apparatus according to the invention can be used also as moving impurity, especially oil-scrapers, if they are moved (e.g. pushed or hauled) by a craft on still water.

Brief Description of Drawings

The essential steps of the method according to the invention will now be further described in detail by way of example with reference to the accompanying drawings in which:

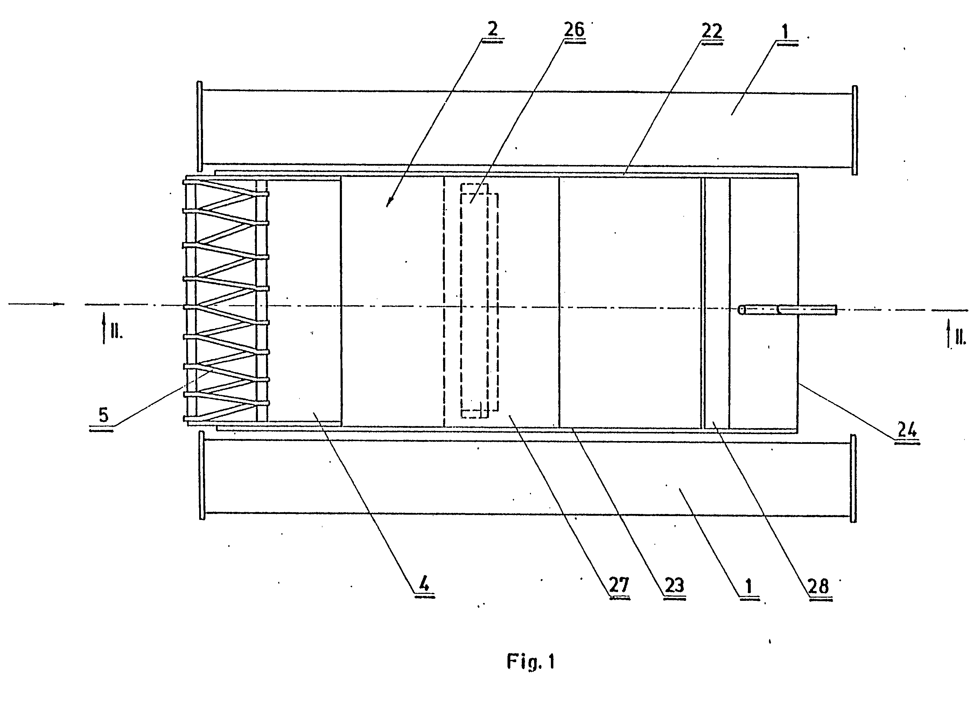

Fig. 1 is a schematic top view of an oil removing device according to the invention, and

Fig. 2 is a sectional diagram taken along II—II plane of the same device shown in Fig. 1.

Best Mode of Carrying Out the Invention

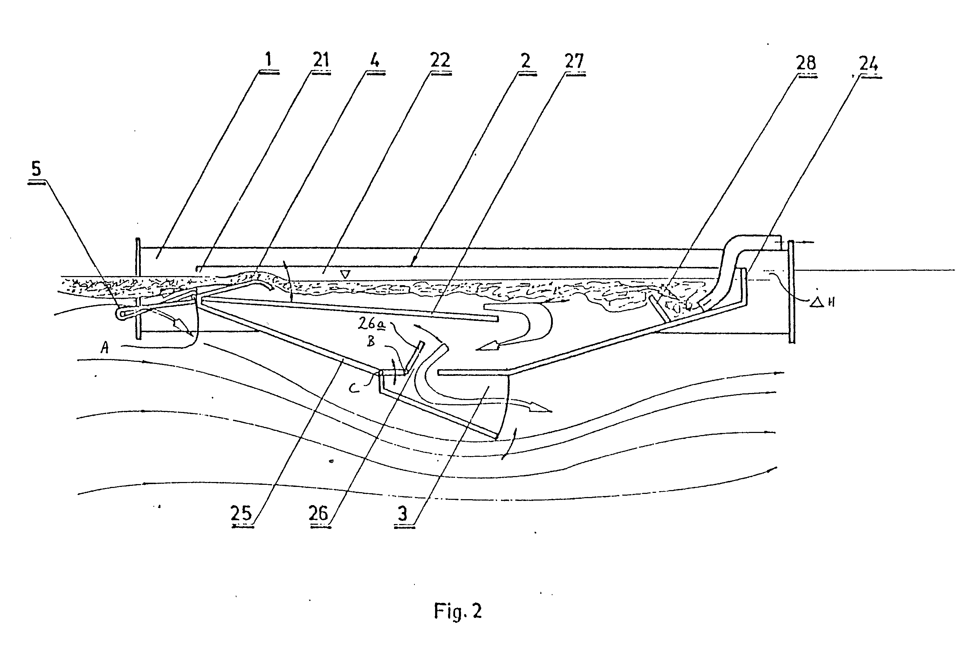

The device taken as an example and illustrated on the drawings, contains a tank-like submersion body 2 with rectangular top view, provided with a weir 4 whose height can be adjusted by pivoting the weir about an axis A on the open front end 21 facing the direction of water flow. The weir encloses a rectangular region of water together with side walls 22, 23 and rear end 24. The bottom 25 of the body has a depth that firstly increases from the front end 21 and then gradually decreases. On the bottom 25 of submersion body 2, approximately in the middle and at the greatest submersion depth, there is a hole 26 whose cross-sectional area is adjustable by pivoting a closing element 26A about axis B. A further feature of submersion body 2 is that in its inner space there is a baffle plate 27 dividing the inner space of the submersion body 2 into separate parts; the baffle extends from the front end 21 to a position above opening 26 in bottom 25. There is also a deflection throat 3 in the bottom 25 of submersion body 2, covering opening 26 from the outside and being pivotable (about C, see Fig. 2) to provide an outlet orifice of adjustable cross-section. In vessel 2 in the rear end area, opposite to weir 4 there is an impurity collecting zone separated by a barrier 28 extending from the bottom 25 to a position under the water surface and if it is desired to remove an impurity, e.g. oil, by pumping, the end of a suction conduit joined to a suction pump is placed in the area behind barrier 28. Other impurity discharging means e.g. mechanical, adhesion etc. can be connected with said device according to the invention also in said zone. The submersion body 2 is kept floating by floats 1 placed on its two sides.

The apparatus according to the invention operates as follows:

The water flowing underneath vessel 2, which is kept floating and anchored by floats 1, is locally accelerated as a result of the restricted flow cross-section caused by the presence of the apparatus. In this way, one important feature of the method according to the invention can be achieved, namely in a flowing or forced flowing water, an increased flow rate is produced and maintained below the vessel. As a result, according to the Bernoulli formula, the increase of speed produces a local suction effect through opening 26 formed on the bottom 25 and acting on the inner space of submersion body 2 and this results in permanent water level decrease ΔH in the water within the weir 4, and enclosed by side walls 22, 23 and end wall 24. The magnitude of the suction effect depends on the longitudinal section of submersion body 3, but for a given body at a given flow rate, the suction can be adjusted by changing the cross-section of opening 26 using the flap 26a and by adjusting the angular position of deflection throat 3.

The impurities, particularly oil, floating on the surface flow together with the surface layer of water over the weir 4 as a result of the water level difference between the inside and the outside of the body, without significant speed reduction. By avoiding damming, as well as with the help of grid 5 arranged in front of weir 4, turbulent-free inflow of the impure surface water can be ensured, thus there will be no eddies causing losses in discharging. As structural material, rubber is preferably used for making grid 5 due to its favourable damping and self-cleaning ability.

Referring to a further characteristic feature of the method according to the invention, separation of impurities and water can be performed by reducing the rate of flow of water flow in the region of lowered water level and by changing the direction of flow. For this purpose the baffle plate 27 placed in the region of submersion body 2 forces the liquid flowing in through weir 4 and leaving the submersion body 2 through opening 26 into a path of gradually increasing cross-section bringing about accordingly a reduction of flow rate, and also forcing the liquid to reverse its direction of flow by performing a turn of approximately 180°. It has been found that in the course of this flow, gravitational separation of impurities, particularly oil, and water flowing on the surface takes place. The impurities (oil) get collected in a practically flow-free zone provided with a barrier 28 extending from the bottom 25 to a position under the lowered water surface and located in a rear end part opposite the weir 4. Meanwhile, the excess water leaves the inner space of submersion body 2 through opening 26 and deflection throat 3 and in the course of doing so, makes repeated changes of direction. The collected oil can be discharged in any of the ways already known.

It can be easily understood that it does not matter to the apparatus and the method according to the invention how the relative speed difference between the device and the water to be purified is produced. Therefore, the device for carrying out the method according to the invention can be equipment anchored in flowing surface water or equipment that is moved in still water by vessels or otherwise.

**Claims**

1. A method of removing floating liquid contamination from naturally- or forcedly-flowing water surfaces, which process comprises skimming off a surface layer of the water that also contains contamination by means of a weir (4), maintaining on the downstream side of the weir a region of water whose surface level is below that of the flowing water on the upstream side of the weir, separating and collecting the contaminants and discharging the water through an orifice (26), characterised in that the water in the region downstream of the weir is maintained at a lower level by a suction effect applied to the region by the flow of the naturally- or forcedly-flowing water past the orifice (26) which is located below the level of the naturally- or forcedly-flowing water and further characterised in that the separation of the contaminants is achieved by decreasing the velocity of water in the low water level region and by causing the water to reverse its flow direction between the weir and the outlet orifice, whereby a localized substantially flow-free area is established in which the contaminants collect and from which they can be removed.

2. An apparatus for removing floating liquid contamination from naturally- or forcedly-flowing water, which apparatus is partially submergible in the water and comprises a vessel (2) for maintaining within it a region of water whose level is below that of the naturally- or forcedly-flowing water, a weir (4) located at the leading end (21) of the vessel for admitting a surface layer of naturally- or forcedly-flowing water and contaminants into the region, an outlet orifice (26) for discharging water from the vessel (2) and means (24) for collecting or removing the contaminants, characterised in that the vessel firstly increases in depth rearwardly from its leading edge and then decreases in depth towards the trailing edge, the outlet orifice (26) being located at or near the part of the vessel having greatest depth and including means (26a) for varying the cross-section of the orifice (26), the apparatus further comprising a baffle throat (3) partially surrounding the orifice (26) on the outside of the vessel (2) and further characterised in that in front of the weir (4) there is provided an eddy-dissipating grid (5).

3. An apparatus as claimed in claim 2, characterised in that the eddy-dissipating grid (5) is made of resilient material.

4. An apparatus as claimed in claim 2 or claim 3, characterised in that within the interior of the vessel (2) there is a flow guiding baffle plate (27) extending from the leading end (21) of the vessel (2) to a position in which it lies overhead of the orifice (26) and further characterised in that the baffle plate (27) is downwardly inclined as its extends rearwardly from the said leading end (21).

5. An apparatus as claimed in any one of claims 2 to 4, characterised in that the weir is of adjustable height.

6. An apparatus as claimed in claim 4, characterised in that the baffle plate (27) is pivotally mounted within the vessel (2) to change the flow cross-section of water and impurities flowing through the vessel.

**Patentansprüche**

1. Verfahren zur Entfernung schwimmender, flüssiger Verunreinigungen von natürlich oder forciert fließender Wasseroberflächen, unter Abheben einer Flächenschicht des die Verunreinigung enthaltenden Wassers mittels eines Wehrs, wobei auf der Abström seite des Wehrs ein Wasserfeld aufrechterhalten wird, dessen Oberflächenniveau unterhalb des Niveaus auf der Anströmseite der Wehrs liegt, worauf man die Verunreinigungen abscheidet, sammelt und durch eine Öffnung abführt, dadurch gekennzeichnet, daß das Wasser im Feld auf der Abströmseite des Wehrs auf einen niedrigerem Niveau durch einen Saugeffekt gehalten wird, der auf dieses feld durchdas Strömen des natürlich oder forciert bewegten Wassers hinter der Ablauföffnung erzeugt wird, welche unter dem Niveau des natürlich oder forciert bewegten Wassers angeordnet ist, wobei ferner die Abscheidung der Verunreinigungen durch Herabsetzung der Strömungsgeschwindigkeit des Wassers in tiefer gelegenen Wasserfeld und durch Umkehr der Strömungsrichtung des Wassers zwischen dem Wehr und Abströmöffnung bewirkt wird, so daß sich ein im wesentlichen unbewegtes Feld ausbildet, in welchem sich die Verunreinigungen sam-

meln und aus dem sie entfernt werden können.

2. Vorrichtung zur Entfernung von schwimmenden flüssigen Verunreinigungen aus natülich fließendem oder künstlich bewegtem Wasser, welche Vorrichtung teilweise in dieses Wasser eintauchbar ist und aus einem Behälter (2) für die Aufrechterhaltung eines Wasserfeldes, dessen Niveau unterhalb des Niveaus des natürlich fließenden oder forciert bewegten Wassers liegt und einem Wehr (4) besteht, das am vorderen Ende (21) des Behälters zwecks Aufnahme einer Schicht des natürlich fließenden oder forciert bewegten Wassers und der Verunreinigungen in das Wasserfeld angeordnet ist, und daß eine Auslaßöffnung (26) zum Ablaufen des Wassers aus dem Behälter (2) sowie Mittel (24) für das Sammeln und Entfernen der Verunreinigungen vorgesehen sind, dadurch gekennzeichnet, daß der Behälter (2) hinsichtlich seiner Tiefernerstreckung, ausgehend von seiner Vorderseite, zunächst nach hinten zunimmt, sodann gegen die Hinterkante zu abnimmt, daß die Auslaßöffnung (26) an dem Teil oder in der Nähe des Teiles des Behälters vorgesehen ist, der die größte Tiefernerstreckung aufweist und daß Mittel (26a) für die Abänderung des Querschnittes der Öffnung (26) vorgesehen sind, wobei ferner eine Ablenkplatte (3) vorgesehen ist, die die Öffnung (26) an der Außenseite des Behälters (2) umschließt und daß schließlich an der Front des Wehres (4) ein Gitter (5) für die Auflösung von Wirbeln vorgesehen ist.

3. Vorrichtung nach Anspruch 2, dadurch gekennzeichnet, daß das Gitter (5) für die Auflösung von Wirbeln aus nachgiebigem Material besteht.

4. Vorrichtung nach Anspruch 2 oder 3, dadurch gekennzeichnet, daß im Inneren des Behälters (2) eine Leitplatte (27) für die Strömung vorgesehen ist, die sich von der Frontseite (21) des Behälters (2) zu einer Stelle erstreckt, in der sie oberhalb der Austrittsöffnung (26) zu liegen kommt und daß die Leitplatte (27) von dem Ende (21) an der Frontseite angefangen nach hinten abwärts geneigt verläuft.

5. Vorrichtung nach einem der Ansprüche 2 bis 4, dadurch gekennzeichnet, daß das Wehr (4) eine einstellbare Höhe aufweist.

6. Vorrichtung nach Anspruch 4, dadurch gekennzeichnet, daß die Leitplatte (27) schwenkbar im Behälter (2) befestigt ist, so daß der Strömungsquerschnitt des durch den Behälter fließenden Wassers und der Verunreinigungen verändert werden kann.

**Revendications**

1. Un procédé d'enlèvement d'impuretés liquides flottantes à partir de surfaces d'eau en écoulement naturel ou forcé, ce procédé consistant à écumer une couche superficielle de l'eau qui contient également des impuretés au moyen d'un déversoir (4), à maintenir sur le côté d'aval du déversoir une zone d'eau dont le niveau de surface est placé en-dessous de l'eau en écoulement sur le côté d'amont du déversoir, à séparer et collecter les impuretés et à décharger l'eau par l'intermédiaire d'un orifice (26), caractérisé en ce que l'eau se trouvant dans la zone située en aval du déversoir est maintenue à un niveau inférieur par un effet de succion exercé dans cette zone par le passage de l'eau en écoulement naturel ou forcé dans l'orifice (26) qui est placé en-dessous du niveau de l'eau en écoulement naturel ou forcé et en outre caractérisé en ce que la séparation des impuretés est effectuée par réduction de la vitesse de l'eau dans la zone à niveau d'eau abaissé et en produisant une inversion de la direction d'écoulement de l'eau entre le déversoir et l'orifice de sortie, afin de créer une région localisée sensiblement exempte d'écoulement dans laquelle les impuretés sont collectées et à partir de laquelle elles peuvent être enlevées.

2. Un appareil pour enlever des impuretés liquides flottantes d'une eau en écoulement naturel ou forcé, cet appareil pouvant être partiellement immergé dans l'eau et comprenant un récipient (2) pour maintenir intérieurement une zone d'eau dont le niveau est situé en-dessous de l'eau en écoulement naturel ou forcé, un déversoir (4) placé à l'extrémité avant (21) du récipient pour assurer l'admission d'une couche superficielle d'eau en écoulement naturel ou forcé et d'impuretés dans la zone, un orifice de sortie (26) pour décharger de l'eau du récipient (2) et un moyen (24) pour collecter ou évacuer les impuretés, caractérisé en ce que le récipient augmente d'abord de profondeur vers l'arrière à partir de son bord avant et diminue ensuite de profondeur vers le bord arrière, l'orifice de sortie (26) étant placé dans ou à proximité de la partie du récipient ayant la plus grande profondeur et comportant un moyen (26a) pour faire varier la section transversale de l'orifice (26), l'appareil comprenant en outre une gorge à chicanes (3) entourant partiellement l'orifice (26) sur le côté extérieur du récipient (2) et étant en outre caractérisé en ce qu'il est prévu, en avant du déversoir (4), une grille de dissipation de turbulence (5).

3. Un appareil comme revendiqué dans la revendication 2, caractérisé en ce que la grille de dissipation de turbulence (5) est formée d'un matériau élastique.

4. Un appareil comme revendiqué dans la revendication 2 ou la revendication 3, caractérisé en ce qu'il est prévu à l'intérieur du récipient 2, une plaque-chicane de guidage d'écoulement (27) s'étendant depuis l'extrémité avant (21) du récipient (2) jusque dans une position où elle située au-dessus de l'orifice (26) et, en outre, caractérisé en ce que la plaque-chicane (27) est inclinée vers le bas à mesure qu'elle s'étend vers l'arrière à partir de ladite extrémité avant (21).

5. Un appareil comme revendiqué dans l'une quelconque des revendications 2 à 4, caractérisé en ce que le déversoir est de hauteur réglable.

6. Un appareil comme revendiqué à la revendication 4, caractérisé en ce que la plaque-chicane (27) est montée de façon pivotante à l'intérieur du récipient (2) de façon à changer la section de passage de l'eau et des impuretés s'écoulant dans le récipient.

Fig. 1

0 041 537

Fig. 2

0 041 537